# EUROPEAN PATENT APPLICATION

(11) **EP 2 477 062 A1**
(43) Date of publication of application: **18.07.2012**
(21) Application number: 11187335.2
(22) Date of filing: 31.10.2011
(51) Int. Cl.: G02F 1/13357, F21V 8/00

(54) **Back light unit and liquid crystal display having the same**

(30) Priority: 14.01.2011 KR 20110004104
(71) Applicant: Samsung Electronics Co., Ltd., Suwon-si, Gyeonggi-do 442-742 (KR)
(72) Inventor: Jung, Il-yong, Gyeonggi-do (KR); Kim, Tae-bae, Gyeonggi-do (KR)
(74) Representative: Robinson, Ian Michael

(57) **Abstract**

A back light unit and a liquid crystal display having the same are provided. The back light unit includes a light guide plate which has a substantially rectangular plate shape and has a front surface and a rear surface which are disposed parallel to each other and four edge surfaces which are disposed perpendicular to the front surface and the rear surface, at least one light incident surface which is perpendicular to the front surface and the rear surface being formed on at least one of four corner regions of the light guide plate; and a light source unit which is adjacently disposed on the light incident surface and projects a light into the light guide plate via the light incident surface. If the angle between an edge surface which is relatively longer than two edge surfaces which are adjacent to the light incident surface and an incident direction of a light which is projected from the light source unit is θ , the angle θ is 20°< θ < 45°.

## Description

### BACKGROUND

### 1. Field

Apparatuses and methods consistent with the exemplary embodiments relate to a back light unit and a liquid crystal display having the same, and more particularly, to providing a back light unit on which a light source is disposed around a corner region of a light guide plate and a liquid crystal display having the same.

### 2. Description of the Related Art

In general, a liquid crystal display includes a liquid crystal panel displaying an image and a back light unit (BLU) which is disposed on a rear surface of the liquid crystal panel and projects a surface light onto the liquid crystal panel.

The back light unit of the liquid crystal display includes at least one light source and a light guide plate. Previously, the light source was disposed on a rear side of the light guide plate or edge regions. However, recently, since the performance of LEDs has been enhanced and the efficiency of the light guide plate has been improved, a method of disposing a light source in corner regions of the light guide plate has been attempted.

Such a manner, referred to as 'a corner disposition manner' may relatively reduce the number of components and an occupation space in comparison with other disposition manners and thus, the method may contribute to minimization and cost-reduction of the back light unit.

In the case of the corner disposition manner, a high-performance LED is generally applied. Thus, if a heat generated from the LED is not dissipated appropriately in the corner disposition manner, the LED may be damaged or a liquid crystal provided on a liquid crystal panel may be degradated. In addition, since a light source is disposed on corner regions of the light guide plate in the case of the corner disposition manner, brightness uniformity of a surface light may be deteriorated in comparison with other disposition manners of a light source.

### SUMMARY

Exemplary embodiments address at least the above problems and/or disadvantages and other disadvantages not described above. Also, exemplary embodiments are not required to overcome the disadvantages described above, and an exemplary embodiment may not overcome any of the problems described above.

Exemplary embodiments provide a back light unit where a corner disposition method of a light source is applied. Accordingly, the exemplary embodiments provide the back light unit whose heat radiation efficiency and brightness uniformity are enhanced, and a liquid crystal display including the back light unit.

According to the present invention there is provided a backlight unit and a liquid crystal display as set forth in the appended claims. Other features of the invention will be apparent from the dependent claims, and the description which follows. In one aspect, exemplary embodiments provide a back light unit which comprises a light guide plate which has a substantially rectangular plate shape and has a front surface and a rear surface which are disposed parallel to each other and four edge surfaces which are disposed perpendicular to the front surface and the rear surface, light incident surfaces which are perpendicular to the front surface and the rear surface being formed on at least one among four corner regions of the light guide plate, and a light source unit which is adjacent to the light incident surfaces and which projects a light in the light guide plate via the light incident surfaces, wherein if an angle between an edge surface which is relatively long between two edge surfaces which are adjacent to the light incident surfaces and a light incident direction of the projected light from the light source unit is θ, the angle θ is 20°< θ < 45°.

The angle θ may be 30°.

The light source unit may comprises at least one LED light source and a printed circuit board to which the LED light source is mounted.

The back light unit may further comprise a supporting member where the printed circuit board is mounted and supported; and a rear sash which supports a rear surface of the light guide plate and a lower surface of the supporting member.

At least one heat radiating pin dissipates heat which is generated by the LED light source may be formed on the supporting member.

The heat radiating pin may protrude from the lower surface of the supporting member.

A pin exposing hole for exposing the heat radiating pin may be formed through the rear sash.

The supporting member and the rear sash may be made of metal.

The supporting member and the rear sash may be made of aluminum or galvanized steel.

At least one wire guiding groove for guiding a power supplying wire which is provided on the printed circuit board may be formed on the supporting member, and at least one wire guiding hole which is connected to the wire guiding groove may be formed on the rear sash.

The supporting member has a board mounted surface where the printed circuit board is mounted, and the at least one wire guiding groove may be concavely formed on the board mounted surface.

The wire guiding groove may comprise a first wire guiding groove and a second wire guiding groove which are adjacent to two ends of the printed circuit board, and the wire guiding hole may comprise a first wire guiding hole and a second wire guiding hole which are communicated with the first wire guiding groove and the second wire guiding groove respectively.

The light incident surfaces may be formed on four corner regions of the light guide plate respectively.

The light incident surfaces may be formed on only two regions among the four corner regions of the light guide plate.

The light incident surface may be formed on any one region of the four corner regions of the light guide plate.

In addition, to achieve the above inventive concept, an exemplary embodiment comprises a light guide plate which has a substantially rectangular plate shape and has a front surface and a rear surface which are disposed parallel to each other and four edge surfaces which are disposed perpendicular to the front surface and the rear surface, light incident surfaces which are perpendicular to the front surface and the rear surface being formed on at least one among four corner regions of the light guide plate; a light source unit which is adjacent to the light incident surfaces and projects a light into the light guide plate via the light incident surfaces; and a supporting member where the light source unit is mounted and at least one heat radiating pin to dissipate heat which is generated by the light source unit.

The light source unit may comprise at least one LED light source; and a printed circuit board where the LED light source is mounted.

The supporting member which is made of metal may mount a printed circuit board of the light source unit thereon.

The supporting member may be made of aluminum or galvanized steel.

The back light unit may further comprise a rear sash which supports a rear surface of the light guide plate and a lower surface of the supporting member.

The rear sash may be made of metal.

The rear sash may be made of aluminum or galvanized steel.

The heat radiating pin may be protruded from a lower surface of the supporting member and a pin exposing hole for exposing the heat radiating pin may be formed through the rear sash.

At least one wire guiding groove for guiding a power supplying wire which is provided on the printed circuit board may be formed on the supporting member, and at least one wire guiding hole which is connected to the wire guiding groove may be formed on the rear sash.

The supporting member may have a board mounted surface where the printed circuit board is mounted, and at least one wire guiding groove may be concavely formed on the board mounted surface.

If an angle θ between an edge surface which is relatively long between two edge surfaces which are adjacent to the light incident surfaces and a light incident direction of the projected light from the light source unit is θ, the angle θ may be a 20°< θ < 45°.

The angle θ may be 20° < θ < 45°.

### BRIEF DESCRIPTION OF THE DRAWINGS

The above and/or other aspects will be more apparent by describing certain exemplary embodiments with reference to the accompanying drawings, in which:

FIG. 1 is a schematic cross-section view of a liquid crystal display according to an exemplary embodiment;

FIG. 2 is plan view of a back light unit provided on a liquid crystal display of FIG. 1 and is a view omitting a front sash;

FIG. 3 is a enlarged front perspective view illustrating a first corner region of the back light unit of FIG. 2;

FIG. 4 is an exploded perspective view of components illustrated in FIG. 3;

FIG. 5 is a rear view showing a first corner region illustrated in FIG. 3;

FIG. 6 is a schematic plane view illustrating a first corner region of the back light unit of FIG. 2;

FIG. 7 is a schematic plane view illustrating a first corner region of the back light unit according to a second exemplary embodiment; and

FIG. 8 is a view overlapping FIGS. 6 and 7 for comparing the back light unit of the first exemplary embodiment with the back light unit of the second exemplary embodiment.

### DETAILED DESCRIPTION OF THE EXEMPLARY EMBODIMENTS

A liquid crystal display according to an exemplary embodiment will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

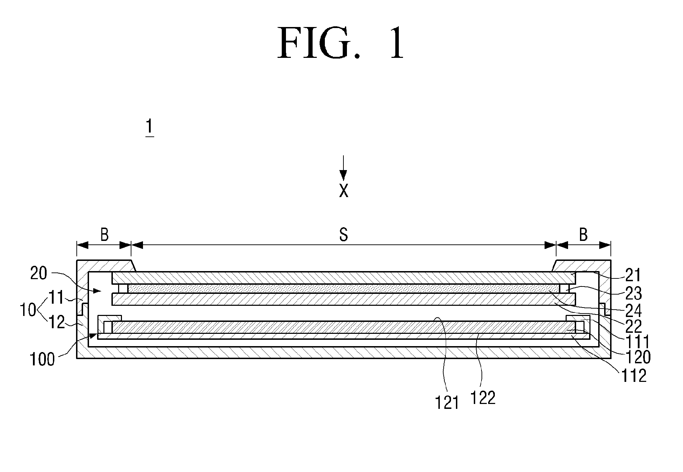

FIG. 1 is a schematic cross-section view illustrating a liquid crystal display according to an exemplary embodiment. In addition, for convenience of description, many of the components that are less relevant to technical ideas of the exemplary embodiments are omitted in FIG. 1.

Referring to FIG. 1, the liquid crystal display 1 according to an exemplary embodiment includes a housing 10, a liquid crystal panel 20, and a back light unit 100.

The housing 10 houses and supports a number of components such as the liquid crystal panel 20 and the back light unit 100. The housing 10 includes a front housing 11 and a rear housing 12 which form an inner housing space when coupled to each other. The front housing 11 has an opening exposing an image of the liquid crystal display forward.

When the liquid crystal display 1 is viewed from the front position (namely, in a z direction), an active display area S where an image is displayed through the opening of the front housing 11 and a bezel B where an image is not displayed may be seen. Herein, since the bezel B does not display an image, it is preferable for the bezel B to have as small a size as possible.

The liquid crystal panel 20 includes an upper plate 21 and a lower plate 22 that are made of glass. The upper plate 21 and the lower plate 22 are placed apart at a predetermined interval by sealant 23 and liquid crystal 24 is filled in a space between the upper plate 21 and the lower plate 22. Although not illustrated in FIG. 1, a color filter is provided on the upper plate 21 and a thin film transistor is formed on the lower plate 22. Alternatively, in other alternative exemplary embodiments, both the color filter and the thin film transistor may be provided on the lower plate 22.

The back light unit 100 is disposed on a rear side of the liquid crystal panel 20 and provides a surface light on the liquid crystal panel 20. Light transmission amount of the surface light projected from the back light unit 100 onto the liquid crystal panel 20 is adjusted by liquid crystal 24 and the projected surface light may be realized as an image by the color filter of the upper plate 21. Adjusting the light transmission amount of the liquid crystal 24 is achieved by a structure adjustment of a molecule arrangement of the liquid crystal 24, and the adjustment of the structure of the molecule arrangement is carried out by the thin film transistor provided on the lower plate 22.

The back light unit 100 includes a light guide plate 120, a front sash 111, and a rear sash 112.

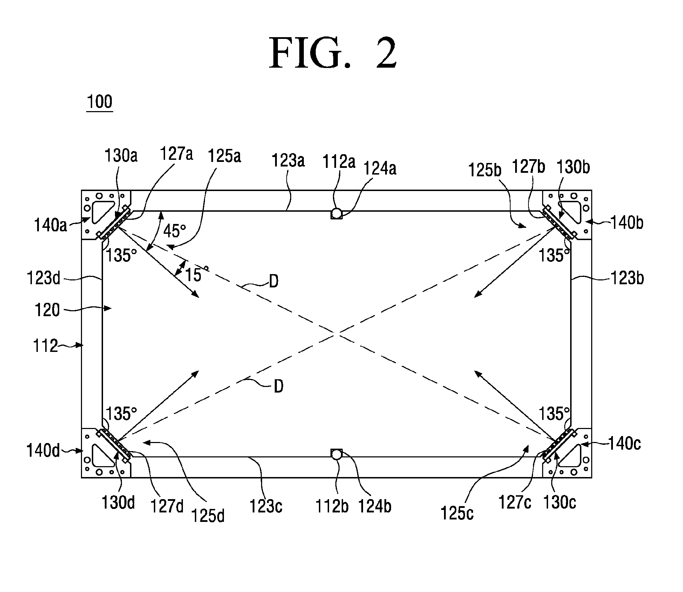

The light guide plate 120 changes a light generated by light source units 130a-130d (refer to FIG. 2) into a form of a surface light and projects the surface light toward the liquid crystal panel 20. Accordingly, although not illustrated, a large number of patterns for guiding a light incident from the light source units toward the liquid crystal panel 20 are formed on the rear side 122 of the light guide plate 120. The light guide plate 120 is made of poly methyl methacrylate (PMMA) which is a kind of transparent plastic.

The front sash 111 and the rear sash 112 contain the light guide plate 120 between them. A front surface 121 of the light guide plate 120 is supported by the front sash 111 and a rear surface 122 of the light guide plate 120 is supported by the rear sash 112. It is preferable that the front sash 111 and the rear sash 112 are made of metal having high thermal conductivity. For example, the front sash 111 and the rear sash 112 may be made of aluminum or galvanized steel. However, the make-up of the front sash and the rear sash are not limited thereto.

Referring to FIGS. 2 to 5, the back light unit 100 will be described in greater detail.

FIG. 2 is a plan view of the back light unit provided on the liquid crystal display in FIG. 1 and is a view omitting the front sash.

The light guide plate 120 has a substantially rectangular plate shape. In addition, the light guide plate 120 has four edge surfaces 123a-123d perpendicular to the front surface 121 (see FIG. 1) and the rear surface 122 (see FIG. 2) of the light guide plate 120. For convenience of description, edge surfaces 123a, 123b, 123c, and 123d will be called a first edge surface, a second edge surface, a third edge surface, and a fourth edge surface respectively. The first edge surface 123a and the third edge surface 123c which are parallel to each other are relatively longer than the second edge surface 123b and the fourth edge surface 123d which are parallel to each other.

Fixing grooves 124a and 124b are formed on the first edge surface 123a and the third edge surface 123c respectively. By inserting fixing protrusions 112a and 112b provided on the rear sash 112 into the fixing grooves 124a and 124b, location of the light guide plate 120 may be fixed.

Since the light guide plate 120 has a substantially rectangular plate shape, the light guide plate 120 has four corner regions 125a-125d as illustrated in FIG. 2. For convenience of description, corner regions 125a, 125b, 125c, and 125d are called a first corner region, a second corner region, a third corner region, and a fourth corner region respectively.

Light incident surfaces 127a∼127d are formed on the corner regions 125a∼125d respectively. For convenience of description, light incident surfaces 127a, 127b, 127c, and 127d will be called a first incident surface, a second incident surface, a third incident surface, and a fourth incident surface respectively. Light incident surfaces 127a -127d are rectangular flat surfaces, and are disposed perpendicular to the front surface 121 (see FIG. 1) and the rear surface 122 (see FIG. 2) of the light guide plate 120. In addition, a 135° angle is formed between each of light incident surfaces 127a-127d and two edge surfaces adjacent to each light incident surface. For example, a 135° angle is formed between the first incident surface 127a and the first edge surface 123a or the fourth edge surface 123d adjacent to the first incident surface 127a.

The back light unit 100 further includes four light source units 130a-130d adjacently disposed to the four corner regions 125a∼125d. For convenience of description, the light source units 130a, 130b, 130c, and 130d will be called a first light source unit, a second light source unit, a third light source unit, and a fourth light source unit respectively. Each of the light source units 130a∼130d projects a light into the light guide plate 120 via the light incident surfaces 127a∼127d disposed against the light source units 130a∼130d. For example, the first light source unit 130a projects a light into the light guide plate 120 via the first light incident surface 127a disposed against the first light source unit 130a.

Light source units 130a to 130d project a light in a perpendicular direction to the light incident surfaces 127a~127d corresponding to the light source units 130a∼130d. Accordingly, as illustrated in FIG. 2, the light source units 130a∼130d project a light toward the edge surfaces 123a∼123d adjacent to the light source units 130a∼130d so that a 45° angle may be formed between the projected light and the edge surfaces 123a∼123d. For example, a 45° angle is formed between the light projected from the first light source unit 130a and the first edge surface 123a or the fourth edge surface 123d adjacent to the first light source unit 130a.

Accordingly, a 15° angle is formed between the light projected from the light source units 130a∼130d and diagonal lines D of the light guide plate 120. Accordingly, a light incident direction of the light projected from the light source units 130a∼130d is not parallel to the direction of the diagonal lines D of the light guide plate 120.

In the present exemplary embodiment, four light source units 130a∼130d are provided. However, the number of light source units is not limited thereto, and may be one, two, or three in other alternative exemplary embodiments. Namely, the light source unit may be disposed on around only one corner region, only two corner regions, or only three corner regions, instead of every corner region.

The back light unit 100 further includes four supporting members 140a to 140d. For convenience of description, the supporting members 140a, 140b, 140c, and 140d will be called a first supporting member, a second supporting member, a third supporting member, and a fourth supporting member respectively. These supporting members 140a-140d are mounted on, and are supported by, the rear sash 112, and are disposed on corner regions of the rear sash 112. Light source units 130a∼130d corresponding to each of the supporting members 140a~140d are mounted and supported. It is preferable that the supporting members 140a~140d are made of metal having high thermal conductivity. Accordingly, for example, the supporting members 140a∼140d may be made of aluminum or galvanized steel. However, the make-up of the supporting members is not limited thereto.

Since structures of the first to fourth light source units 130a∼130d of the back light unit 100 are equal to each other, structures of the second to fourth light source unit 130b∼130d may be understood from the structure of the first light source unit 130a. Similarly, since structures of the first to fourth supporting members 140a~140d of the back light unit 100 are equal each other, structures of the second supporting member to the fourth supporting member 140b~140d may be understood from the structure of the first supporting member 140a.

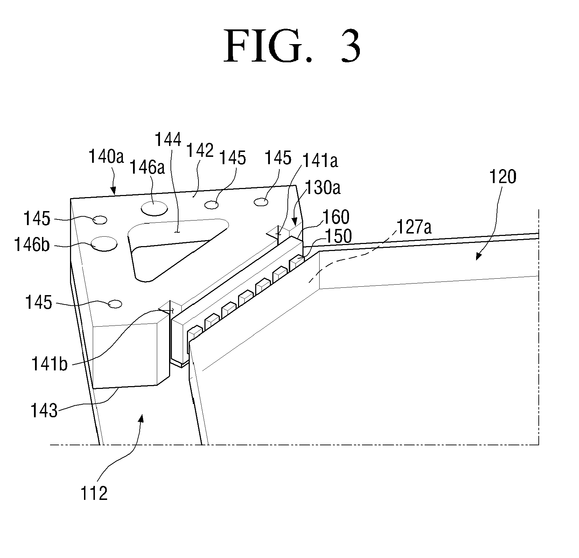

Therefore, for a detailed understanding of the light source units 130a~130d and the supporting members 140a∼140d, the first light source unit 130a on behalf of the light source units 130a~130d and the first supporting member 140a on behalf of the supporting members 140a∼140d will be described with reference to FIGS. 3 to 5.

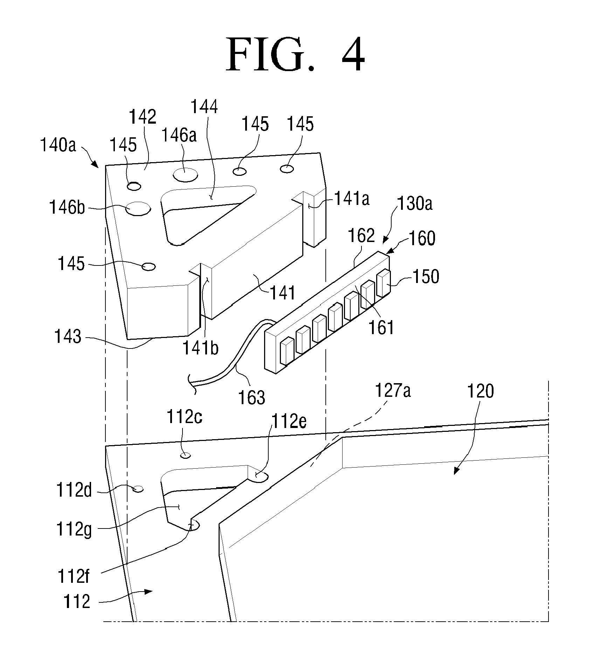

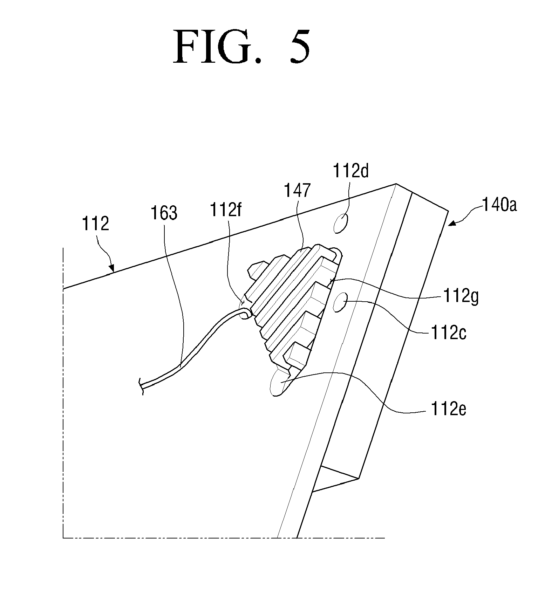

FIG. 3 is an enlarged front perspective view illustrating a first corner region of the back light unit in FIG. 2, FIG 4 is an exploded perspective view illustrating components illustrated in FIG. 3, and FIG. 5 is a rear perspective view showing a first corner region illustrated in FIG. 3.

Referring to FIGS. 3 and 4, the light source unit (the first light source unit) 130a includes six LED light sources 150 and a printed circuit board (PCB) 160.

The LED light sources 150 are mounted on one side 161 of the printed circuit board 160 at the same intervals. In addition, the LED light sources 150 are disposed to face the light incident surface (the first light incident surface) 127a of the light guide plate 120. Accordingly, a light generated by the LED light sources 150 may be incident into an inside of the light guide plate 120 via the light incident surface 127a. The light source unit 130a provides seven LED light sources 150 in the present exemplary embodiment, however, the light source unit 130a may provide more or less than seven LED light sources 150 in other alternative exemplary embodiments.

The printed circuit board 160 is for operating the LED light sources 150 and has a substantially rectangular plate shape. The LED light sources 150 are mounted on one side 161 of the printed circuit board 160. In addition, the other side 162 of the printed circuit board 160 is attached onto a board mounted surface 141 of the supporting member 140a with a double-sided tape. In other alternative exemplary embodiments, the printed circuit board 160 may be mounted on the board mounted surface 141 by using a screw.

The printed circuit board 160 is disposed parallel to the light incident surface 127a of the light guide plate 120. Accordingly, the light generated by the LED light sources 150 mounted on the printed circuit board 160 may be incident perpendicularly to the light incident surface 127a of the light guide plate 120.

A power supplying wire 163 for supplying electric power to the LED light sources 150 and the printed circuit board 160 is coupled to the rear surface 162 of the printed circuit board 160. The power supplying wire 163 is connected to a power board (not illustrated) provided on the rear side of the back light unit 100.

The supporting member (the first supporting member) 140a may have a polyhedral shape. More specifically, the supporting member 140a has an upper surface 142 and a lower surface 143 which are perpendicular to each other, and a plurality of edge surfaces including a board mounted surface 141.

A triangular groove 144 may be formed on a center region of the upper surface 142 of the supporting member 140a. The groove 144 reduces weight and material consumption of the supporting member 140a. Four screwed holes 145 for screwing the front sash 111 (see FIG. 1) are also formed on the upper surface 142 of the supporting member 140a.

A couple of screw guiding holes 146a and 146b are formed on the upper surface 142 of the supporting member 140a. These screw guiding holes 146a and 146b are extended to the lower surface 143 of the supporting member 140a, and communicated with a couple of screwed holes 112c and 112d formed on the rear sash 112. A couple of screws (not illustrated) are screwed into the screwed holes 112c and 112d of the rear sash 112 via the screwed holes 146a and 146b of the supporting member 140a so that the supporting member 140a may be mounted on the rear sash 112.

The board mounted surface 141 of the supporting member 140a is a surface where the printed circuit board 160 is mounted as described above. The first wire guiding groove 141a and the second wire guiding groove 141b are concavely formed on the board mounted surface 141. Two ends of the printed circuit board 160 are adjacently disposed to the first wire guiding groove 141a and the second wire guiding groove 141b respectively. The first wire guiding groove 141a and the second wire guiding groove 141b are respectively communicated with a first wire guiding hole 112e and a second wire guiding hole 112f penetrating the rear sash 112. Accordingly, the power supplying wire 163 provided on the printed circuit board 160 may be connected to a power board via the first wire guiding groove 141a and the first wire guiding hole 112e, or may be connected to the power board via the second wire guiding groove 141b and the second wire guiding hole 112f.

The wire guiding holes 112e and 112f formed on the rear sash 112 and a pin exposing hole 112g are illustrated as a combination in the present exemplary embodiment. However, the wire guiding holes 112e and 112f may be separated from the pin exposing hole 112g in other alternative exemplary embodiments.

As illustrated in FIG. 5, a number of heat radiation pins 147 are formed on a lower surface of the supporting member 140a. Parts of the heat radiation pins 147 are exposed outwards from the rear sash 112 via the pin exposing hole 112g penetrating the rear sash 112. As described above, since the supporting member 140a is made of metal having high thermal conductivity such as aluminum or galvanized steel, the heat radiation pins 147 formed on the rear surface 143 of the supporting member 140a are made of metal having high thermal conductivity.

The heat generated by the LED light sources 150 is transmitted to the supporting member 140a via the printed circuit board 160. Part of transmitted heat may be dissipated to the surrounding air via the rear sash 112 supporting the lower surface of the supporting member 140a, and part of the heat may be dissipated to the surrounding air via a plurality of heat radiation pins 147 formed on the lower surface of the supporting member 140a.

Accordingly, since the generated heat of the LED light sources 150 may be dissipated to the surrounding air via the rear sash 112 made of metal and the supporting member 140a which is made of metal and has heat radiation pins 147, heat radiation efficiency of the generated heat may be enhanced. Therefore, the back light unit 100 of the present exemplary embodiment may have high heat radiation efficiency.

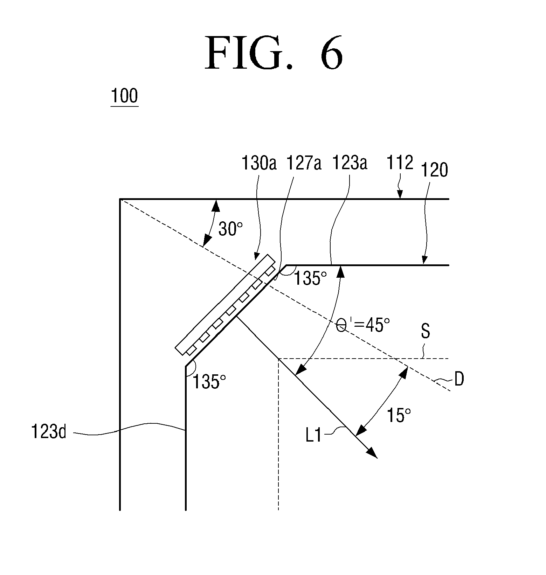

Referring to FIG. 6, brightness uniformity of the back light unit 100 according to the present exemplary embodiment will be described. FIG. 6 is a schematic plan view illustrating a first corner region of the back light unit in FIG. 2.

Referring to FIG. 6, as described above, a 135° angle is formed between the light incident surface 127a of the light guide plate 120 and the edge surfaces 123a or 123d (adjacent to the light incident surface 127a) of the light guide plate. Accordingly, a 45° angle θ' is formed between an incident direction of a light L1 generated from the light source unit 130a and the edge surfaces 123a and 123d of the incident direction of the light L1.

As described above, a substantially 15° angle is formed between the incident direction of a light L1 and diagonal lines D of the light guide plate 120. That is, the incident direction of the light L1 is not parallel to the diagonal lines D of the light guide plate 120, which may deteriorate the brightness uniformity of a surface light provided by the back light unit 100.

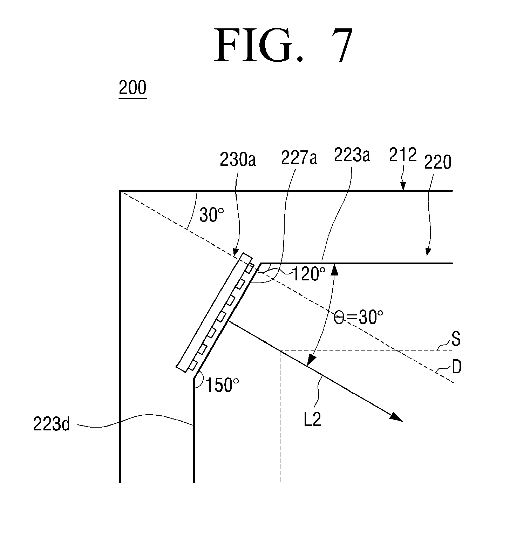

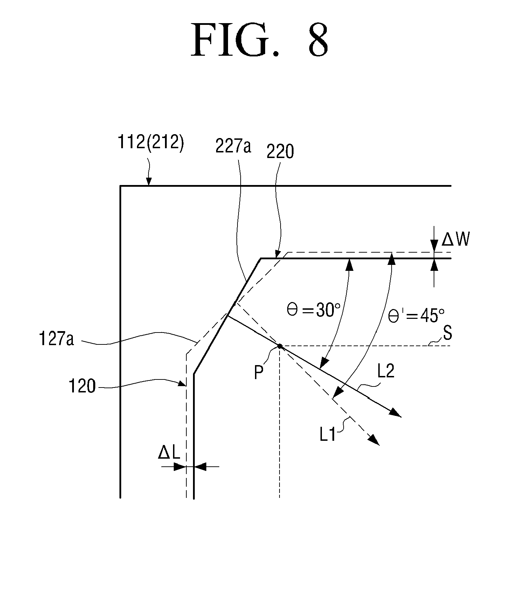

Accordingly, the exemplary embodiment suggests a back light unit 200 according to the second exemplary embodiment where the brightness uniformity is enhanced. The back light unit 200 according to the second exemplary embodiment will be described with reference to FIGS. 7 and 8.

FIG. 7 is a schematic plan view illustrating around the first corner region of the back light unit according to the second exemplary embodiment.

Referring to FIG. 7, in the back light unit 200 of the second exemplary embodiment, a 150° angle is formed between the light incident surface 227a of the light guide plate 220 and the short edge surface 223d adjacent to the light incident surface 227a, and a 120° angle is formed between the light incident surface 227a and the long edge surface 223a adjacent to the light incident surface 227a. Accordingly, the back light unit 200 of the second exemplary embodiment is distinct from the back light unit 100 of the previous exemplary embodiment (the first exemplary embodiment) in that a 135° angle is not formed between the light incident surface 227a of the light guide plate 220 and the edge surfaces 223a and 223d adjacent to the light incident surface 227a.

Therefore, in case of the back light unit 200 of the second exemplary embodiment, a 30° angle θ is formed between the light incident direction L2 of the light L2 projected from the light source unit 230a and the long edge surface 223a adjacent to the L2. If the θ is a 30° angle, the light incident direction of the L2 is parallel to the direction of the diagonal line D of the light guide plate 220. Since the light incident direction of the L2 is parallel to the diagonal line D of the light guide plate 220, the back light unit 200 of the second exemplary embodiment may present relatively enhanced brightness uniformity of the surface light in comparison with the back light unit 100 of the first exemplary embodiment.

The back light unit 200 of the second exemplary embodiment has an additional advantage of having a reduced size of the light guide plate in comparison with the back light unit 100 of the first exemplary embodiment, which will be described later with reference to FIG. 8.

FIG. 8 is a view overlapping FIGS. 6 and 7 to compare the back light unit of the first exemplary embodiment with the back light unit of the second exemplary embodiment.

Referring to FIG. 8, if an active display area S of the two back light units is equal and a distance from a corner point P of the active display area S to the light incident surfaces 127a or 227a of the two back light units is equal, comparing with the back light unit 100 of the first exemplary embodiment in which an angle θ is 45°, the back light unit 200 of the second exemplary embodiment in which an angle θ is 30° angle has a length of the light guide plate which is reduced by ΔL and a width of the light guide plate which is reduced by ΔW.

Accordingly, it may be understood that a size of the light guide plate is reduced in the case where the angle θ is 30° angle, which may be an additional advantage. If the size of the light guide plate is reduced, bezel (see B in FIG. 1) of the liquid crystal display may also be reduced. Therefore, the size of the bezel may be reduced if the angle θ is a 30° angle, which may be an additional advantage.

Although the angle of θ which is 30° angle was exemplified in case of the back light unit 200 of the second exemplary embodiment, size reduction of the light guide plate and the size reduction of the bezel according to the size reduction of the light guide plate may be achieved by other values of the angle θ. For example, if the angle is 20°< θ <45° angle, the size of the light guide plate and the bezel may be reduced according to a principle of FIG. 8. However, in the case where the angle is 20° < θ <45° angle, since the angle between the light advancing direction and the direction of the diagonal lines of the light guide plate increases as a difference between the angle θ and the 30°angle increases, it should be understood that the brightness uniformity of the surface light may be deteriorated.

The foregoing exemplary embodiments and advantages are merely exemplary and are not to be construed as limiting the exemplary embodiments. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A backlight unit, comprising:
a light guide plate which has a substantially rectangular plate shape and has a front surface and a rear surface which are disposed parallel to each other and four edge surfaces which are disposed perpendicular to the front surface and the rear surface, at least one light incident surface which is perpendicular to the front surface and the rear surface, and which is formed on at least one of four corner regions of the light guide plate; and
a light source unit which is adjacent to the at least one light incident surface and projects a light in the light guide plate via the light incident surfaces,
wherein if an angle between an edge surface which is relatively long between two edge surfaces which are adjacent to the light incident surfaces and a light incident direction of the projected light from the light source unit is θ, the angle θ is 20°< θ < 45°.

2. The backlight unit as claimed in claim 1, wherein the angle θ is 30°.

3. The back light unit as claimed in claim 1 or 2, wherein the light source unit is disposed to make a light incident perpendicularly to the light incident surfaces.

4. The back light unit as claimed in claim 1, 2 or 3 wherein the light source unit comprises:
at least one LED light source; and
a printed circuit board to which the LED light source is mounted.

5. The back light unit as claimed in claim 4, further comprising:
a supporting member to which the printed circuit board is mounted and supported, and
a rear sash which supports a rear surface of the light guide plate and a lower surface of the supporting member.

6. The back light unit as claimed in claim 5, wherein at least one heat radiating pin, which dissipates heat which is generated by the LED light source, is formed on the supporting member.

7. The back light unit as claimed in claim 6, wherein the heat radiating pin protrudes from the lower surface of the supporting member.

8. The back light unit as claimed in claim 7, wherein a pin exposing hole, which exposes the heat radiating pin, is formed through the rear sash.

9. The back light unit as claimed in claim 5, wherein the supporting member and the rear sash are made of metal.

10. The back light unit as claimed in claim 9, wherein the supporting member and the rear sash are made of aluminum or a galvanized steel sheet.

11. The back light unit as claimed in claim 5, wherein at least one wire guiding groove, which guides a power supplying wire provided on the printed circuit board, is formed on the supporting member, and at least one wire guiding hole, which is connected to the wire guiding groove, is formed on the rear sash.

12. The back light unit as claimed in claim 11, wherein the supporting member has a board mounting surface where the printed circuit board is mounted, and the at least one wire guiding groove is concavely formed on the board mounting surface.

13. The back light unit as claimed in claim 11, wherein the wire guiding groove comprises a first wire guiding groove and a second wire guiding groove which are adjacent to two ends of the printed circuit board, and the wire guiding hole comprises a first wire guiding hole and a second wire guiding hole which are communicated with the first wire guiding groove and the second wire guiding groove respectively.

14. The back light unit as claimed in claim 1, wherein the light incident surfaces are formed on four corner regions of the light guide plate respectively, on only two regions among the four corner regions of the light guide plate, or on any one region of the four corner regions of the light guide plate.

15. A liquid crystal display comprising a back light unit according to any one of claims 1 to 14.
